# EUROPEAN PATENT APPLICATION

(11) **EP 4 633 226 A1**
(43) Date of publication of application: **15.10.2025**
(21) Application number: 23899770.4
(22) Date of filing: 22.11.2023
(51) Int. Cl.: H04W 24/08

(54) **METHOD AND APPARATUS USED IN COMMUNICATION NODE FOR WIRELESS COMMUNICATION**

(30) Priority: 10.12.2022 CN 202211586774
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/133157
(87) International publication number: WO 2024/120191

(57) **Abstract**

Disclosed in the present application are a method and apparatus used in a communication node for wireless communication. As a response to each condition in a first set of conditions being satisfied, a communication node transmitting a first wireless signal; together with the transmission of the first wireless signal, the communication node detecting a first information block on a second cell; the first information block comprising at least one of SS, MIB and SIB1; the first set of conditions comprising at least one of a first condition or a second condition, the first condition being related to the link quality of at least a first cell, and the second condition comprising that the second cell is a network energy-saving cell; and of the first cell and the second cell, at least the latter does not have a legitimate SIB1 or a legitimate SSB. The present application reduces signaling overhead and network energy consumption.

## Description

### Technical Field

The present application relates to transmission methods and apparatuses in wireless communication systems, in particular to transmission methods and apparatuses for system information acquisition.

### Background Art

Network Energy Saving (NES) is of great significance for environmental sustainability, reducing impacts on the environment (greenhouse gas emission), and saving operating costs. As 5G (the 5th Generation Partnership Project) becomes popular in industries and geographic regions, very high data rates are required to handle more advanced services and applications (such as XR), resulting in increasingly dense networks, the use of more antennas, greater bandwidths, and more frequency bands. In order to keep the impacts of 5G on the environment within a controllable range, new solutions need to be studied to improve network energy savings. Therefore, 3GPP (the 3rd Generation Partnership Project) RAN#94 meeting approved a Study Item (SI) "Study on network energy savings", supporting technical enhancements in time domains, frequency domains, spatial domains, power domains, and other aspects.

### Summary of the Invention

Not transmitting an SSB (Synchronization Signal Block) or an SIB1 (System Information Block 1) on one cell, or reducing a frequency of transmitting an SSB or an SIB1, or transmitting an incomplete SSB or SIB1 is an optional technical means to achieve network energy savings. Researchers have found that in some specific scenarios, UE (User Equipment) needs to receive an SSB or SIB1 of a network energy-saving cell that uses this technical means, so as to acquire downlink synchronization or system information, or perform a channel measurement; in particular, but not limited to, when the UE moves between different cells, it is necessary to perform a measurement on an adjacent cell, and the measurement based on the SSB can acquire the channel quality of the adjacent cell, and if the adjacent cell is a network energy-saving cell that uses this technical means, it will have an impact on the UE's measurement for the adjacent cell. Therefore, how to acquire an SSB or SIB1 of a network energy-saving cell that uses this technical means needs to be enhanced.

In view of the above-mentioned problem, the present application provides a solution for system information acquisition. In the description for the above-mentioned problem, an N (R New Radio) system is used as an example; the present application is also applicable to scenarios such as an LTE (Long-Term Evolution) system or an LTE-A (LTE Advanced) system; and further, although the present application provides specific implementations for network energy savings, the present application can also be used in scenarios such as a specific network, achieving technical effects similar to network energy savings. Further, although the original intention of the present application is to target a Uu air interface, the present application can also be used for PC5 interfaces. Further, although the original intention of the present application is to target terminal and base station scenarios, the present application is also applicable to V2X (Vehicle-to-Everything) scenarios, as well as communication scenarios between terminals and relays and between relays and base stations, achieving similar technical effects in the terminal and base station scenarios. Further, although the original intention of the present application is to target terminal and base station scenarios, the present application is also applicable to IAB (Integrated Access and Backhaul) communication scenarios, achieving similar technical effects in the terminal and base station scenarios. Further, although the original intention of the present application is to target TN (Terrestrial Network) scenarios, the present application is also applicable to Non-Terrestrial Network communication scenarios, achieving similar technical effects in TN scenarios. In addition, adopting a unified solution in different scenarios can also help reduce hardware complexity and costs.

As one embodiment, the explanation of the terminology in the present application refers to the definitions in the TS36 series of the specification protocol of 3GPP.

As one embodiment, the explanation of the terminology in the present application refers to the definitions in the TS38 series of the specification protocol of 3GPP.

As one embodiment, the explanation of the terminology in the present application refers to the definitions in the TS37 series of the specification protocol of 3GPP.

As one embodiment, the explanation of the terminology in the present application refers to the definitions in the specification protocol of IEEE (Institute of Electrical and Electronics Engineers).

It should be noted that in case of no conflict, the embodiments and the features in the embodiments in any node of the present application may be applied to any other node. In the case of no conflict, the embodiments and the features in the embodiments of the present application can be arbitrarily combined with each other.

The present application discloses a method used in a first node for wireless communication, characterized by comprising:
as a response to each condition in a first set of conditions being satisfied, transmitting a first wireless signal;
and together with a transmission of the first wireless signal, detecting a first information block on a second cell,
wherein the first information block comprises at least one of SS (Synchronization Signal), MIB (Master Information Block) and SIB1; and the second cell does not have a legitimate SIB1 or a legitimate SSB.

Typically, the first set of conditions comprises a first condition, and the first condition is related to link quality of at least a first cell.

Typically, the first set of conditions comprises a second condition, and the second condition comprises that the second cell is a network energy-saving cell.

Typically, the first set of conditions comprises a first condition and a second condition, the first condition is related to link quality of at least a first cell, and the second condition comprises that the second cell is a network energy-saving cell.

As one embodiment, the problem to be solved in the present application comprises: how to acquire a first information block of the second cell.

As one embodiment, the problem to be solved in the present application comprises: how to trigger to acquire the first information block of the second cell.

As one embodiment, the characteristics of the above-mentioned method comprise: a first wireless signal triggers a transmission of the first information block.

As one embodiment, the characteristics of the above-mentioned method comprise: a transmission of a first wireless signal depends on a first set of conditions.

As one embodiment, the benefits of the above-mentioned method comprise: a frequency of triggering a first information block is reduced.

As one embodiment, the benefits of the above-mentioned method comprise: a transmission frequency of a first information block is reduced.

As one embodiment, the benefits of the above-mentioned method comprise: a transmission of base station broadcast signaling is reduced to reduce base station power consumption.

According to one aspect of the present application, it is characterized by receiving a first threshold; and performing a measurement for the first cell,
wherein the first condition comprises that a measurement result for the first cell is worse than or not better than the first threshold.

According to one aspect of the present application, it is characterized by comprising:
receiving a second threshold; and performing a measurement for the second cell,
wherein the first condition comprises that a measurement result for the second cell is better than or not worse than the second threshold.

According to one aspect of the present application, it is characterized by comprising:
receiving a first message;
wherein the first message is used for determining a first resource block, and the first resource block is used for transmitting the first wireless signal.

As one embodiment, a sender of the first message is a maintenance base station of the first cell.

As one embodiment, a sender of the first message is a maintenance base station of the second cell.

According to one aspect of the present application, it is characterized by comprising:
receiving the first information block; and performing a measurement of the first information block for the second cell as a response to a reception of the first information block.

According to one aspect of the present application, it is characterized by comprising:
transmitting a first measurement report;
wherein the first measurement report comprises a measurement result of the measurement of the first information block for the second cell.

According to one aspect of the present application, it is characterized by comprising:
receiving first signaling, wherein the first signaling indicates the second cell; and applying configuration information of the second cell as a response to a reception of the first signaling; or applying configuration information of the second cell as a response to performing the measurement of the first information block for the second cell,
wherein the configuration information of the second cell comprises a physical cell identify of the second cell.

As one embodiment, the first measurement report is transmitted before a behavior of applying configuration information of the second cell.

As one embodiment, the first measurement report is not transmitted before the behavior of applying configuration information of the second cell.

As one embodiment, the first signaling is used for configuring at least one candidate cell, and the second cell is one candidate cell in the at least one candidate cell.

As one embodiment, the first signaling indicates that the first node moves from the first cell to the second cell.

The present application discloses a method used in a second node for wireless communication, characterized by comprising:
receiving a first wireless signal;
and together with a reception of the first wireless signal, transmitting a first information block on a second cell,
wherein as a response to each condition in a first set of conditions being satisfied, the first wireless signal is transmitted; the first information block comprises at least one of SS, MIB and SIB1; and the second cell does not have a legitimate SIB1 or a legitimate SSB.

Typically, the first set of conditions comprises a first condition, and the first condition is related to link quality of at least a first cell.

Typically, the first set of conditions comprises a second condition, and the second condition comprises that the second cell is a network energy-saving cell.

Typically, the first set of conditions comprises a first condition and a second condition, the first condition is related to link quality of at least a first cell, and the second condition comprises that the second cell is a network energy-saving cell.

According to one aspect of the present application, it is characterized in that the first condition also comprises that a measurement result for the first cell is worse than or not better than a first threshold; a sender of the first wireless signal receives the first threshold; and the sender of the first wireless signal performs a measurement for the first cell.

According to one aspect of the present application, it is characterized in that the first condition comprises that a measurement result for the second cell is better than or not worse than a second threshold; the sender of the first wireless signal receives the second threshold; and the sender of the first wireless signal performs a measurement for the second cell.

According to one aspect of the present application, it is characterized in that the first message indicates a first resource block, and the first resource block is used for transmitting the first wireless signal; and a sender of the first wireless signal receives the first message.

According to one aspect of the present application, it is characterized in that the sender of the first wireless signal receives the first information block; and as a response to the first information block being received, the sender of the first wireless signal performs a measurement of the first information block for the second cell.

According to one aspect of the present application, it is characterized in that a sender of the first wireless signal transmits a first measurement report; and the first measurement report comprises a measurement result of the measurement of the first information block for the second cell.

According to one aspect of the present application, it is characterized in that a sender of the first wireless signal receives first signaling, the first signaling indicating the second cell; and as a response to the first signaling being received, the sender of the first wireless signal applies configuration information of the second cell; or as a response to the measurement of the first information block for the second cell being performed, the sender of the first wireless signal applies configuration information of the second cell; and the configuration information of the second cell comprises a physical cell identify of the second cell.

The present application discloses a first node used for wireless communication, characterized by comprising:
a first transmitter for transmitting a first wireless signal as a response to each condition in a first set of conditions being satisfied;
and a first receiver for detecting a first information block on a second cell together with a transmission of the first wireless signal,
wherein the first information block comprises at least one of SS, MIB and SIB1; and the second cell does not have a legitimate SIB1 or a legitimate SSB.

Typically, the first set of conditions comprises a first condition, and the first condition is related to link quality of at least a first cell.

Typically, the first set of conditions comprises a second condition, and the second condition comprises that the second cell is a network energy-saving cell.

Typically, the first set of conditions comprises a first condition and a second condition, the first condition is related to link quality of at least a first cell, and the second condition comprises that the second cell is a network energy-saving cell.

The present application discloses a second node used for wireless communication, characterized by comprising:
a second receiver for receiving a first wireless signal;
and a second transmitter for transmitting a first information block on a second cell together with a reception of the first wireless signal,
wherein a first set of conditions comprises a first condition, and the first condition is related to link quality of at least a first cell; the first information block comprises at least one of SS, MIB and SIB1; and the second cell does not have a legitimate SIB1 or a legitimate SSB.

Typically, the first set of conditions comprises a first condition, and the first condition is related to link quality of at least a first cell.

Typically, the first set of conditions comprises a second condition, and the second condition comprises that the second cell is a network energy-saving cell.

Typically, the first set of conditions comprises a first condition and a second condition, the first condition is related to link quality of at least a first cell, and the second condition comprises that the second cell is a network energy-saving cell.

As one embodiment, compared with traditional solutions, the present application has the following advantages:
- . reducing a frequency of triggering a first information block;
- . reducing a sending frequency of the first information block; and
- . reducing a transmission of base station broadcast signaling to reduce base station power consumption.

### Brief Description of the Drawings

Other features, objects and advantages of the present application will become more apparent by reading the detailed description of non-limiting embodiments with reference to the following drawings:
FIG. 1 shows a flowchart of a transmission of a first wireless signal and a first information block according to one embodiment of the present application;
FIG. 2 shows a schematic diagram of a network architecture according to one embodiment of the present application;
FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows a flowchart of a wireless signal transmission according to one embodiment of the present application;
FIG. 6 shows a flowchart of a first condition being satisfied according to one embodiment of the present application;
FIG. 7 shows a flowchart of a wireless signal transmission of a first message according to one embodiment of the present application;
FIG. 8 shows a flowchart of a wireless signal transmission of a first measurement report according to one embodiment of the present application;
FIG. 9 shows a flowchart of a wireless signal transmission of applying configuration information of a second cell according to one embodiment of the present application;
FIG. 10 shows a structural block diagram of a processing device used in a first node according to one embodiment of the present application; and
FIG. 11 shows a structural block diagram of a processing device used in a second node according to one embodiment of the present application.

### Detailed Description of Embodiments

The technical solution of the present application will be further described in detail below in conjunction with the accompanying drawings. It should be noted that the embodiments and features in the embodiments in the present application can be arbitrarily combined with each other in case of no conflict.

### Embodiment 1

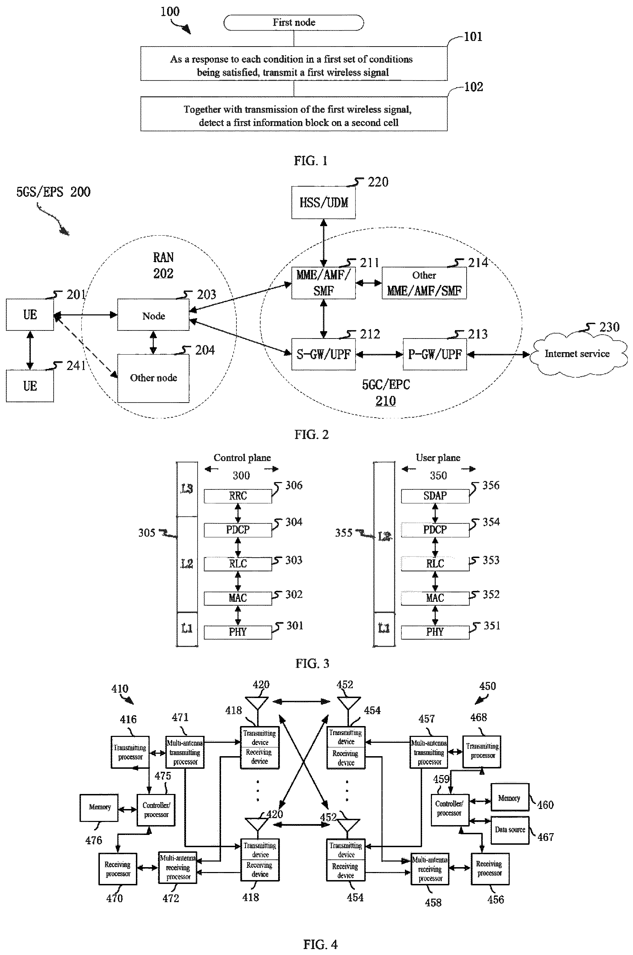

Embodiment 1 illustrates a flowchart of a transmission of a first wireless signal and a first information block according to one embodiment of the present application, as shown in FIG. 1. In FIG. 1, each block represents one step. It should be specifically emphasized that the sequence of various blocks in the figure does not represent a chronological order of the represented steps.

In Embodiment 1, a first node in the present application transmits a first wireless signal as a response to each condition in a first set of conditions being satisfied in step 101; and detects a first information block on a second cell together with a transmission of the first wireless signal in step 102, wherein the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB.

As one embodiment, the first set of conditions comprises the first condition and the second condition, and the first set of conditions comprises at least one condition other than the first condition and the second condition.

As one embodiment, the first set of conditions only comprises the first condition and the second condition.

As one embodiment, when the first condition and the second condition are satisfied, each condition in the first set of conditions is satisfied.

As one embodiment, when at least the first condition and the second condition are both satisfied, each condition in the first set of conditions is satisfied.

As one embodiment, the first set of conditions only comprises the second condition.

As one embodiment, the first set of conditions comprises the second condition, and the first set of conditions comprises one condition other than the second condition.

As one sub-embodiment of this embodiment, any condition other than the second condition in the first set of conditions is irrelevant to a measurement for any cell other than the second cell, and any condition other than the second condition in the first set of conditions is related to the measurement for the second cell.

As one sub-embodiment of this embodiment, any condition other than the second condition in the first set of conditions is irrelevant to the measurement for any cell.

As one embodiment, the second condition comprises that the second cell is a network energy-saving cell and the second cell is in a network energy-saving state.

As one embodiment, the second condition comprises that the second cell is a network energy-saving cell and the first node does not support the network energy-saving cell.

As one embodiment, the second condition comprises that the second cell is a network energy-saving cell and the first node does not want to access the network energy-saving cell.

As one embodiment, the second condition comprises that the second cell is a network energy-saving cell and the first node does not support the network energy-saving cell or the first node does not want to access the network energy-saving cell.

As one embodiment, the second condition comprises that the second cell is a network energy-saving cell and the second cell is in a network energy-saving state and the first node does not support the network energy-saving cell.

As one embodiment, the second condition comprises that the second cell is a network energy-saving cell and the second cell is in a network energy-saving state and the first node does not want to access the network energy-saving cell.

As one embodiment, "the first node does not support the network energy-saving cell" comprises: the first node does not support protocol specifications of a 3GPP R18 version.

As one embodiment, "the first node does not support the network energy-saving cell" comprises: the first node does not have UE capability to support network energy savings.

As one embodiment, "the first node does not support the network energy-saving cell" comprises: the first node is not configured with network energy savings.

As one embodiment, "the first node does not support the network energy-saving cell" comprises: the first node does not support a given network energy-saving cell, and the given network energy-saving cell comprises the second cell.

As one embodiment, the second condition comprises that the first node receives one MIB message, and the one MIB message indicates that the second cell is a network energy-saving cell.

As one embodiment, the second condition comprises: the first node receives one SIB, and the one SIB indicates that the second cell is a network energy-saving cell.

As one embodiment, the second condition comprises: the first node receives one SIB1 message, and the one SIB1 message indicates that the second cell is a network energy-saving cell.

As one embodiment, the second condition comprises: the first node receives one MIB message, and the one MIB message indicates that the second cell is in a network energy-saving state.

As one embodiment, the second condition comprises: the first node receives one SIB, and the one SIB indicates that the second cell is in a network energy-saving state.

As one embodiment, the second condition comprises: the first node receives one SIB1 message, and the one SIB1 message indicates that the second cell is in a network energy-saving state.

As one embodiment, the first cell is not a network energy-saving cell. As one embodiment, the first cell is one network energy-saving cell.

As one embodiment, the first message indicates that the second cell is a network energy-saving cell.

As one embodiment, the first set of conditions only comprises the first condition.

As one embodiment, the first set of conditions comprises the first condition, and the first set of conditions comprises at least one condition other than the first condition.

As one sub-embodiment of this embodiment, any condition other than the first condition in the first set of conditions is irrelevant to Layer 3 measurement for a cell.

As one sub-embodiment of this embodiment, at least one condition other than the first condition in the first set of conditions is related to Layer 3 measurement for a cell.

As one sub-embodiment of this embodiment, at least one condition other than the first condition in the first set of conditions is irrelevant to Layer 1 measurement for a cell.

As one sub-embodiment of this embodiment, any condition other than the first condition in the first set of conditions is related to Layer 1 measurement for a cell.

As one embodiment, the first condition is only related to the link quality of the first cell.

As one embodiment, the first condition is related to the link quality of the first cell, and the first condition is related to link quality of the second cell.

As one embodiment, the link quality of the first cell depends on a measurement result of Layer 3 of the first cell.

As one embodiment, the link quality of the first cell is related to a measurement result of Layer 3 of the first cell.

As one embodiment, a measurement result of Layer 3 of the first cell is used for determining the link quality of the first cell.

As one embodiment, the link quality of the first cell depends on a measurement result of Layer 1 of the first cell.

As one embodiment, the link quality of the first cell is related to a measurement result of Layer 1 of the first cell.

As one embodiment, a measurement result of Layer 1 of the first cell is used for determining the link quality of the first cell.

As one embodiment, each condition in the first set of conditions being satisfied is used for triggering the first wireless signal.

As one embodiment, the first wireless signal is triggered as a response to each condition in the first set of conditions being satisfied.

As one embodiment, after each condition in the first set of conditions is satisfied, the first wireless signal is transmitted.

As one embodiment, as long as any condition in the first set of conditions is not satisfied, the first wireless signal is not transmitted.

As one embodiment, the first wireless signal triggers a transmission of the first information block.

As one embodiment, the first wireless signal is used for waking up the second cell.

As one embodiment, the first wireless signal is used for requesting the second cell to enter a non-network energy-saving state from a network energy-saving state.

As one embodiment, the first wireless signal is used for requesting the first information block.

As one embodiment, the first wireless signal is used for requesting the second cell to transmit the first information block.

As one embodiment, the first wireless signal indicates the first information block.

As one embodiment, a time-frequency resource occupied by the first wireless signal indicates the first information block.

As one embodiment, the first wireless signal is associated with the first information block.

As one embodiment, a time-frequency resource occupied by the first wireless signal is associated with the first information block.

As one embodiment, the first wireless signal is one uplink signal.

As one embodiment, the first wireless signal is one secondary link signal.

As one embodiment, the first wireless signal is one Wake-up indication.

As one embodiment, the first wireless signal is one WUS (Wakeup Signal).

As one embodiment, the first wireless signal comprises an RRC message.

As one embodiment, the first wireless signal is an RRC message.

As one embodiment, the first wireless signal is one MSGA (Message A).

As one embodiment, the first wireless signal is one MSG3 (Message 3).

As one embodiment, the first wireless signal comprises a physical layer signal.

As one embodiment, the first wireless signal is a physical layer signal.

As one embodiment, the first wireless signal is one physical layer signal.

As one embodiment, the first wireless signal occupies 1 bit.

As one embodiment, the first wireless signal is one Preamble.

As one embodiment, the first wireless signal is one bit sequence.

As one embodiment, the first wireless signal is one bit.

As one embodiment, a time-frequency resource occupied by the first wireless signal is predefined.

As one embodiment, a time domain resource occupied by the first wireless signal is related to an index of one SSB.

As one embodiment, a time domain resource occupied by the first wireless signal is related to an index of one of the first time-frequency resource blocks.

As one embodiment, a time-frequency resource occupied by the first wireless signal is pre-configured.

As one embodiment, a time-frequency resource occupied by the first wireless signal is one candidate time-frequency resource.

As one embodiment, a time-frequency resource occupied by the first wireless signal is one candidate time-frequency resource in multiple candidate time-frequency resources.

As one embodiment, a time-frequency resource occupied by the first wireless signal is indicated by an MIB message.

As one embodiment, a time-frequency resource occupied by the first wireless signal is indicated by an SIB1 message.

As one embodiment, a time-frequency resource occupied by the first wireless signal is indicated by an RRC message.

As one embodiment, the phrase "together with a transmission of the first wireless signal" comprises: at least after the first wireless signal is transmitted.

As one embodiment, the phrase "together with a transmission of the first wireless signal" comprises: as a response to a transmission of the first wireless signal.

As one embodiment, the phrase "together with a transmission of the first wireless signal" comprises: as a response to a reception of a second wireless signal, wherein as a response to a transmission of the first wireless signal, the second wireless signal is received.

As one sub-embodiment of this embodiment, the second wireless signal triggers a reception of the first information block.

As one sub-embodiment of this embodiment, the second wireless signal is used for determining that the first information block is transmitted.

As one sub-embodiment of this embodiment, the second wireless signal is transmitted on a PDCCH (Physical Downlink Control Channel).

As one sub-embodiment of this embodiment, the second wireless signal is one ACK (Acknowledgement).

As one sub-embodiment of this embodiment, the second wireless signal is one piece of DCI (Downlink Control Information).

As one sub-embodiment of this embodiment, the second wireless signal is one downlink signal.

As one sub-embodiment of this embodiment, the second wireless signal is received on the first cell.

As one sub-embodiment of this embodiment, the second wireless signal is received on the second cell.

As one embodiment, the phrase "together with a transmission of the first wireless signal" comprises: after the first wireless signal is transmitted for one time interval.

As one embodiment, the phrase "together with a transmission of the first wireless signal" comprises: after the first wireless signal is transmitted for a positive integer number of time units.

As one sub-embodiment of this embodiment, the time unit is Slot.

As one sub-embodiment of this embodiment, the time unit is Millisecond.

As one sub-embodiment of this embodiment, the time unit is Symbol.

As one embodiment, the first information block is detected in one time window.

As one sub-embodiment of this embodiment, a starting moment of the one time window is related to the first wireless signal.

As one sub-embodiment of this embodiment, a starting moment of the one time window is related to a transmitting end moment of the first wireless signal.

As one sub-embodiment of this embodiment, a starting moment of the one time window is a transmitting end moment of the first wireless signal.

As one sub-embodiment of this embodiment, a starting moment of the one time window is a (positive integer)th symbol after a transmitting end moment of the first wireless signal.

As one sub-embodiment of this embodiment, a time duration of the one time window is pre-configured.

As one sub-embodiment of this embodiment, a time duration of the one time window is configurable.

As one sub-embodiment of this embodiment, the one time window being expired is used for determining that the first information block fails to be received.

As one sub-embodiment of this embodiment, the one time window being expired is used for determining to perform cell reselection.

As one sub-embodiment of this embodiment, the one time window being expired is used for determining to transmit one wireless signal to one cell other than the first cell and the second cell.

As one sub-embodiment of this embodiment, the one time window being expired is used for determining to transmit one wireless signal to the first cell.

As one sub-embodiment of this embodiment, at least the first information block being received is used for stopping the one time window.

As one embodiment, the first information block is detected at an occasion configured to the first information block.

As one embodiment, the first information block is detected at an occasion configured to an SSB; and the first information block is one SSB.

As one embodiment, the first information block is detected at an occasion configured to an SIB1; and the first information block is one SIB1.

As one embodiment, the first information block is detected on a working frequency of the second cell.

As one embodiment, the first information block is detected on a time-frequency resource of the second cell.

As one embodiment, the first information block is detected on a PDCCH of the second cell; and the first information block comprises at least one of SS, MIB and SIB1.

As one embodiment, the first information block is detected on a PBCH (Physical Broadcast Channel) of the second cell; and the first information block comprises at least one of SS or MIB.

As one embodiment, the first information block is detected on an SSB of the second cell; and the first information block set comprises at least one of SS or MIB.

As one embodiment, the first information block belongs to a second cell.

As one embodiment, the first information block is for the second cell.

As one embodiment, the first information block is generated by a maintenance base station of the second cell.

As one embodiment, the first information block is used for indicating the second cell.

As one embodiment, the first information block is used for configuring the second cell.

As one embodiment, the first information block comprises configuration information of the second cell.

As one embodiment, the first information block comprises SS, MIB and SIB1.

As one embodiment, the first information block comprises only the first two of SS, MIB and SIB1.

As one embodiment, the first information block comprises only the latter two of SS, MIB and SIB1.

As one embodiment, the first information block comprises only the first one of SS, MIB and SIB1.

As one embodiment, the first information block comprises only the first one of SS, MIB and SIB1.

As one embodiment, the first information block comprises only the second one of SS, MIB and SIB1.

As one embodiment, the first information block comprises only the third one of SS, MIB and SIB1.

As one embodiment, the first information block is an SSB of the second cell.

As one embodiment, the first information block is an SIB1 of the second cell.

As one embodiment, the first information block is an MIB of the second cell.

As one embodiment, the first information block is an SS of the second cell.

As one embodiment, the first information block is one SIB1.

As one embodiment, the first information block is one piece of RRC (Radio Resource Control) signaling, and the one piece of RRC signaling comprises the SIB1.

As one embodiment, the first information block is one MIB.

As one embodiment, the first information block is one RRC message, and the one RRC message comprises the MIB.

As one embodiment, the first information block is one SSB.

As one embodiment, the first information block is one complete SSB.

As one embodiment, the first information block is one complete SSB, and the one complete SSB comprises the SS and MIB.

As one embodiment, the complete SSB comprises an SS and an MIB.

As one embodiment, the complete SSB comprises an SS and a PBCH, and the PBCH is used for bearing an MIB.

As one embodiment, the complete SSB comprises an SS, a PBCH and a DM-RS of the PBCH, and the PBCH is used for bearing an MIB.

As one embodiment, the first information block is one incomplete SSB.

As one embodiment, the first information block is one incomplete SSB, and the one incomplete SSB comprises SS.

As one embodiment, the incomplete SSB is one simplified SSB.

As one embodiment, the incomplete SSB does not comprise at least one of PSS (Primary synchronization signal), SSS (Secondary synchronization signal) and PBCH.

As one embodiment, the incomplete SSB does not comprise the third one of PSS, SSS and PBCH.

As one embodiment, the incomplete SSB does not comprise the latter two of PSS, SSS and PBCH.

As one embodiment, the incomplete SSB only comprises SS.

As one embodiment, the incomplete SSB only comprises PSS.

As one embodiment, the SS is PSS.

As one embodiment, the SS is PSS and SSS.

As one embodiment, the PBCH is used for bearing the MIB; and the first information block comprises the PBCH.

As one embodiment, the PBCH is used for bearing the MIB; and the first information block comprises the PBCH and a DM-RS (Demodulation Reference Signal) of the PBCH.

As one embodiment, before the first wireless signal is received, the second cell transmits an incomplete SSB; and after the first wireless signal is received, the second cell transmits a complete SSB.

As one embodiment, before the first wireless signal is received, the second cell transmits an SSB at a first time interval; after the first wireless signal is received, the second cell transmits an SSB at a second time interval; and the first time interval is greater than the second time interval.

As one embodiment, before the first wireless signal is transmitted, the second cell does not transmit an SSB; and after the first wireless signal is received, the second cell transmits an SSB.

As one embodiment, before the first wireless signal is transmitted, the second cell does not transmit an SIB1; and after the first wireless signal is received, the second cell transmits an SIB1.

As one embodiment, the first cell and the second cell are two different cells.

As one embodiment, the first cell does not have a legitimate SIB1 or a legitimate SSB; and the second cell does not have a legitimate SIB1 or a legitimate SSB.

As one embodiment, the first cell has a legitimate SIB1 or a legitimate SSB; and the second cell does not have a legitimate SIB1 or a legitimate SSB.

As one embodiment, the legitimate SIB1 is an SIB1 of NR.

As one embodiment, the legitimate SIB1 is an SIB1 of NR recorded in 3GPP Release 15.

As one embodiment, the legitimate SIB1 is an SIB1 of NR recorded in 3GPP Release 16.

As one embodiment, the legitimate SIB1 is an SIB1 of NR recorded in 3GPP Release 17.

As one embodiment, the legitimate SIB1 is an SSB that can be acquired by UE that does not support 3GPP Release 18.

As one embodiment, the legitimate SIB1 is an SSB that can be acquired by UE that does not support a network energy-saving cell.

As one embodiment, the legitimate SIB1 refers to an SIB1 transmitted periodically.

As one embodiment, the legitimate SIB1 refers to an SIB1 transmitted according to 3GPP Release 17 or protocol specifications before the 3GPP Release 17.

As one embodiment, the legitimate SSB is an SSB that can be received by UE that does not support 3GPP Release 18.

As one embodiment, the legitimate SSB is an SSB that can be received by UE that does not support a network energy-saving cell.

As one embodiment, the legitimate SSB is a complete SSB.

As one embodiment, the legitimate SSB refers to an SSB transmitted periodically.

As one embodiment, the legitimate SSB refers to an SSB transmitted according to 3GPP Release 17 or protocol specifications before the 3GPP Release 17.

As one embodiment, the legitimate SSB is an SSB of NR.

As one embodiment, the legitimate SSB is an SSB of NR recorded in 3GPP Release 15.

As one embodiment, the legitimate SSB is an SSB of NR recorded in 3GPP Release 16.

As one embodiment, the legitimate SSB is an SSB of NR recorded in 3GPP Release 17.

As one embodiment, the first cell is an anchor cell, and the second cell is a non-anchor cell.

As one embodiment, the first cell is an anchor cell of the second cell.

As one sub-embodiment of this embodiment, the second cell can acquire downlink synchronization according to the first cell.

As one sub-embodiment of this embodiment, the second cell can acquire an SSB of the second cell from the first cell.

As one sub-embodiment of this embodiment, the second cell can acquire an SIB1 of the second cell from the first cell.

As one sub-embodiment of this embodiment, the first node assumes that the second cell does not transmit an SSB; and the second cell is one non-anchor cell without an SSB.

As one sub-embodiment of this embodiment, the first node assumes that the second cell does not transmit an SIB1; and the second cell is one non-anchor cell without an SIB1.

As one embodiment, the first cell is a serving cell of the first node, and the second cell is a candidate cell of the first cell.

As one embodiment, the first cell is a PCell (Primary Cell) of the first node, and the second cell is an LTM (L1 (Layer 1) L2 (Layer 2) Triggered Mobility) candidate cell configured to the first cell.

As one embodiment, the first cell is a PCell of the first node, and the second cell is a CHO (Conditional Handover) candidate cell configured to the first cell.

As one embodiment, the first cell is a PCell of the first node, and the second cell is a CPC (Conditional PSCell Change) candidate cell configured to the first cell.

As one embodiment, the first cell is a PCell of the first node, and the second cell is a CPA (Conditional PSCell Addition) candidate cell configured to the first cell.

As one embodiment, the first cell is one SCell (Secondary Cell) of the first node, and the second cell is a PCell of the first node.

As one embodiment, the first cell is a PSCell (Primary SCG (Secondary Cell Group) Cell, SCG primary cell) of the first node, and the second cell is a PCell of the first node.

As one embodiment, at least when the first wireless signal is transmitted, the second cell is in a network energy-saving state.

As one embodiment, after the first information block is transmitted, the second cell is in a network energy-saving state.

As one embodiment, after the first information block is transmitted, the second cell is no longer in a network energy-saving state.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as 5GS (5G System)/EPS (Evolved Packet System) 200 or some other suitable terms. The 5GS/EPS 200 comprises at least one of UE (User Equipment) 201, an RAN (radio access network) 202, a 5GC (5G Core Network)/EPC (Evolved Packet Core) 210, HSS (Home Subscriber Server)/UDM (Unified Data Management) 220, and an Internet service 230. The 5GS/EPS can be interconnected with other access networks, but these entities/interfaces are not shown for simplicity. As shown in the figure, although the 5GS/EPS provides a packet switching service, those skilled in the art will readily understand that various concepts presented throughout the present application can be extended to networks or other cellular networks that provide a circuit switching service. The RAN comprises a node 203 and other nodes 204. The node 203 provides user and control plane protocol termination toward the UE201. The node 203 may be connected to the other nodes 204 via an Xn interface (e.g., backhaul)/X2 interface. The node 203 may also be referred to as a base station, a base transceiver station, a radio base station, a radio transceiver, a transceiver function, a basic service set (BSS), an extended service set (ESS), a TRP (transmitter receive point), or some other suitable terms. The node 203 provides the UE201 with access points to the 5GC/EPC210. Examples of the UE201 include cellular telephones, smart phones, Session Initiation Protocol (SIP) telephones, laptops, personal digital assistants (PDAs), satellite radios, non-terrestrial base station communications, satellite mobile communications, global positioning systems, multimedia apparatuses, video apparatuses, digital audio players (for example, MP3 players), cameras, game consoles, drones, aircrafts, narrowband Internet of Things devices, machine type communication devices, land transportation vehicles, automobiles, wearable devices, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The node 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally speaking, the MME/AMF/SMF211 provides bearing and connection management. All user IP (Internet Protocol) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises an operator's corresponding Internet protocol service, which may specifically comprise Internet, intranet, an IMS (IP Multimedia Subsystem), and packet switching streaming services.

As one embodiment, the UE201 corresponds to the first node in the present application.

As one embodiment, the UE201 is one piece of user equipment.

As one embodiment, the UE201 is one terminal (ender).

As one embodiment, the UE201 is one aircraft.

As one embodiment, the UE201 is one vehicle terminal.

As one embodiment, the UE201 is one vessel.

As one embodiment, the UE201 is one Internet of Things terminal.

As one embodiment, the UE201 is one Industrial Internet of Things terminal.

As one embodiment, the UE201 is one test device.

As one embodiment, the UE201 is one signaling tester.

As one embodiment, the UE201 is one relay.

As one embodiment, the node 203 corresponds to the second node in the present application.

As one embodiment, the node 203 is one piece of user equipment.

As one embodiment, the node 203 is one relay.

As one embodiment, the node 203 is one gateway.

As one embodiment, the node 203 is one base station device (BaseStation, BS).

As one embodiment, the node 203 is one TRP.

As one embodiment, the node 204 corresponds to the third node in the present application.

As one embodiment, the node 204 is one piece of user equipment.

As one embodiment, the node 204 is one relay.

As one embodiment, the node 204 is one gateway.

As one embodiment, the node 204 is one base station device (BaseStation, BS).

As one embodiment, the node 204 is one TRP.

As one embodiment, the user equipment supports the transmission of a non-terrestrial network (NTN).

As one embodiment, the user equipment supports the transmission of a terrestrial network.

As one embodiment, the user equipment supports the transmission in a large-latency-difference network.

As one embodiment, the user equipment supports a dual connection (DC) transmission.

As one embodiment, the user equipment supports a transmission with low latency and high reliability.

As one embodiment, the user equipment supports NR.

As one embodiment, the user equipment supports UTRA.

As one embodiment, the user equipment supports EUTRA.

As one embodiment, the base station device supports the transmission of a non-terrestrial network.

As one embodiment, the base station device supports the transmission in a large-latency-difference network.

As one embodiment, the base station device supports the transmission of a terrestrial network.

As one embodiment, the base station device supports network energy savings.

As one embodiment, the base station device comprises a Marco Cellular base station.

As one embodiment, the base station device comprises a Micro Cell base station.

As one embodiment, the base station device comprises a Pico Cell base station.

As one embodiment, the base station device comprises Femtocell.

As one embodiment, the base station device comprises a base station device that supports large latency differences.

As one embodiment, the base station device comprises a flight platform device.

As one embodiment, the base station device comprises a satellite device.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises a test device.

As one embodiment, the base station device comprises a signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the base station device is one base transceiver station (BTS).

As one embodiment, the base station device is one Node B (NodeB, NB).

As one embodiment, the base station device is one gNB.

As one embodiment, the base station device is one eNB.

As one embodiment, the base station device is one ng-eNB.

As one embodiment, the base station device is one en-gNB.

As one embodiment, the relay comprises a relay.

As one embodiment, the relay comprises an L3 relay.

As one embodiment, the relay comprises an L2 relay.

As one embodiment, the relay comprises a router.

As one embodiment, the relay comprises a switch.

As one embodiment, the relay comprises user equipment.

As one embodiment, the relay comprises a base station device.

### Embodiment 3

Embodiment 3 shows a schematic diagram of one embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for the control plane 300 using three layers: Layer 1, Layer 2, and Layer 3. Layer 1 (L1 layer) is a lowest layer and implements various PHY (physical layer) signal processing functions. The L1 layer will be referred to as PHY301 herein. The Layer 2 (L2 layer) 305 is above the PHY301, and comprises a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides cross-zone mobility support. The RLC sublayer 303 provides segmentation and reassembly of upper layer data packets, retransmission of lost data packets, and reordering of data packets to compensate for disordered receptions due to a HARQ (Hybrid Automatic Repeat Request). The MAC sublayer 302 provides multiplexing between logical channels and transport channels. The MAC sublayer 302 is also responsible for allocating various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for acquiring radio resources (i.e., radio bearers) and configuring a lower layer using RRC signaling. A radio protocol architecture of the user plane 350 comprises Layer 1 (L1 layer) and Layer 2 (L2 layer). In the user plane 350, the radio protocol architecture is generally the same as corresponding layers and sublayers in the control plane 300 for a physical layer 351, a PDCP sublayer 354 in the L2 layer 355, an RLC sublayer 353 in the L2 layer 355, and a MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS streams and data radio bearers (DRBs) to support service diversity.

As one embodiment, the wireless protocol architecture in FIG. 3 is applicable to the first node in the present application.

As one embodiment, the wireless protocol architecture in FIG. 3 is applicable to the second node in the present application.

As one embodiment, the wireless protocol architecture in FIG. 3 is applicable to the third node in the present application.

As one embodiment, the first wireless signal in the present application is generated at the RRC306.

As one embodiment, the first wireless signal in the present application is generated at the MAC302 or MAC352.

As one embodiment, the first wireless signal in the present application is generated at the PHY301 or PHY351.

As one embodiment, the first information block in the present application is generated at the RRC306.

As one embodiment, the first information block in the present application is generated at the MAC302 or MAC352.

As one embodiment, the first information block in the present application is generated at the PHY301 or PHY351.

As one embodiment, the first threshold in the present application is generated at the RRC306.

As one embodiment, the first threshold in the present application is generated at the MAC302 or MAC352.

As one embodiment, the second threshold in the present application is generated at the RRC306.

As one embodiment, the second threshold in the present application is generated at the MAC302 or MAC352.

As one embodiment, the first message in the present application is generated at the RRC306.

As one embodiment, the first message in the present application is generated at the MAC302 or MAC352.

As one embodiment, the first message in the present application is generated at the PHY301 or PHY351.

As one embodiment, the first measurement report in the present application is generated at the RRC306.

As one embodiment, the first measurement report in the present application is generated at the MAC302 or MAC352.

As one embodiment, the first measurement report in the present application is generated at the PHY301 or PHY351.

As one embodiment, the first signaling in the present application is generated at the RRC306.

As one embodiment, the first signaling in the present application is generated at the MAC302 or MAC352.

As one embodiment, the first signaling in the present application is generated at the PHY301 or PHY351.

### Embodiment 4

Embodiment 4 shows a schematic diagram of a first communication device and a second communication device according to the present application, as shown in FIG. 4. FIG. 4 is a block diagram of a first communication device 450 and a second communication device 410 that communicate with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In a transmission from the second communication device 410 to the first communication device 450, at the second communication device 410, upper layer data packets from a core network are provided to the controller/processor 475. The controller/processor 475 implements the functionality of the L2 layer. In a transmission from the second communication device 410 to the first communication device 450, the controller/processor 475 provides header compression, encryption, packet segmentation and reordering, multiplexing between logical channels and transport channels, and radio resource allocation for the first communication device 450 based on various priority metrics. The controller/processor 475 is also responsible for a retransmission of lost packets, and signaling to the first communication device 450. The transmitting processor 416 and the multi-antenna transmitting processor 471 implement various signal processing functions for the L1 layer (that is, physical layer). The transmitting processor 416 implements encoding and interleaving to facilitate forward error correction (FEC) at the second communication device 410, and mapping of signal clusters based on various modulation schemes (e.g., binary phase shift keying (BPSK), quadrature phase shift keying (QPSK), M phase shift keying (M-PSK), and M quadrature amplitude modulation (M-QAM)). The multi-antenna transmitting processor 471 performs digital spatial precoding on encoded and modulated symbols, comprising codebook-based precoding and non-codebook-based precoding, and beamforming processing to generate one or more spatial streams. The transmitting processor 416 then maps each spatial stream to a subcarrier, multiplexes with a reference signal (e.g., pilot frequency) in a time domain and/or a frequency domain, and then uses the Fast Fourier Inverse Transform (IFFT) to generate a physical channel carrying a time domain multi-carrier symbol stream. Then, the multi-antenna transmitting processor 471 performs transmitting analog precoding/beamforming operations on the time domain multi-carrier symbol stream. Each transmitting device 418 converts a baseband multi-carrier symbol stream provided by the multi-antenna transmitting processor 471 into a radio frequency stream, and then provides it to different antennas 420.

In a transmission from the second communication device 410 to the first communication device 450, at the first communication device 450, each receiving device 454 receives a signal through its corresponding antenna 452. Each receiving device 454 recovers information modulated to the radio frequency carrier and converts the radio frequency stream into a baseband multi-carrier symbol stream to provide it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses the Fast Fourier Transform (FFT) to convert a baseband multi-carrier symbol stream after the receiving analog precoding/beamforming operations from a time domain to a frequency domain. In the frequency domain, a physical layer data signal and a reference signal are demultiplexed by the receiving processor 456, wherein the reference signal will be used for channel estimation, and the data signal undergoes multi-antenna detection in the multi-antenna receiving processor 458 to recover any spatial stream with the first communication device 450 as a destination. Symbols on each spatial stream are demodulated and recovered in the receiving processor 456 and generate soft decisions. Then, the receiving processor 456 decodes and deinterleaves the soft decisions to recover upper layer data and control signals transmitted by the second communication device 410 on the physical channel. Then, the upper layer data and control signals are provided to the controller/processor 459. The controller/processor 459 implements a function of the L2 layer. The controller/processor 459 may be associated with a memory 460 storing program codes and data. The memory 460 may be referred to as a computer-readable medium.

In a transmission from the second communication device 410 to the second communication device 450, the controller/processor 459 provides demultiplexing between transport channels and logical channels, packet reassembly, decryption, header decompression, and control signal processing to recover upper layer data packets from the core network. Then, the upper layer data packets are provided to all protocol layers above the L2 layer. Various control signals may also be provided to L3 for L3 processing.

In a transmission from the first communication device 450 to the second communication device 410, at the first communication device 450, the data source 467 is used to provide the upper layer data packets to the controller/processor 459. The data source 467 represents all protocol layers above the L2 layer. Similar to the transmitting function at the second communication device 410 described in the transmission from the second communication device 410 to the first communication device 450, the controller/processor 459 implements header compression, encryption, packet segmentation and reordering, and multiplexing between logical channels and transport channels based on wireless resource allocation, to implement L2 layer functions for a user plane and a control plane. The controller/processor 459 is also responsible for a retransmission of lost packets and signaling to the second communication device 410. The transmitting processor 468 performs modulation mapping and channel encoding processing, and the multi-antenna transmitting processor 457 performs digital multi-antenna spatial precoding, including codebook-based precoding and non-codebook-based precoding, and beamforming processing. Then, the transmitting processor 468 modulates generated spatial streams into multi-carrier/single-carrier symbol streams which undergo analog precoding/beamforming operations in the multi-antenna transmitting processor 457 to be then provided to different antennas 452 via a transmitting device 454. Each transmitting device 454 first converts baseband symbol streams provided by the multi-antenna transmitting processor 457 into radio frequency symbol streams, and then supplies the radio frequency symbol streams to the antenna 452.

In a transmission from the first communication device 450 to the second communication device 410, a function at the second communication device 410 is similar to a receiving function at the first communication device 450 described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement a function of the L1 layer. The controller/processor 475 implements a function of the L2 layer. The controller/processor 475 may be associated with a memory 476 storing program codes and data. The memory 476 may be referred to as a computer-readable medium. In a transmission from the first communication device 450 to the second communication device 410, the controller/processor 475 provides demultiplexing between transport channels and logical channels, packet reassembly, decryption, header decompression, and control signal processing to recover upper-layer data packets from the UE450. Upper layer data packets from the controller/processor 475 may be provided to a core network.

As one embodiment, the first communication device 450 comprises: at least one processor and at least one memory, the at least one memory comprising computer program codes; the at least one memory and the computer program codes are configured to be used together with the at least one processor, and the first communication device 450 at least: as a response to each condition in a first set of conditions being satisfied, transmits a first wireless signal; and together with a transmission of the first wireless signal, detects a first information block on a second cell, wherein the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB.

As one embodiment, the first communication device 450 comprises: a memory storing a computer-readable instruction program, the computer-readable instruction program, when executed by at least one processor, generating an action, and the action comprising: as a response to each condition in a first set of conditions being satisfied, transmitting a first wireless signal; and together with a transmission of the first wireless signal, detecting a first information block on a second cell, wherein the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB.

As one embodiment, the second communication device 410 comprises: at least one processor and at least one memory, the at least one memory comprising computer program codes; and the at least one memory and the computer program codes are configured to be used together with the at least one processor. The second communication device 410 at least: receives a first wireless signal; and together with a reception of the first wireless signal, transmits a first information block on a second cell, wherein as a response to each condition in a first set of conditions being satisfied, the first wireless signal is transmitted; the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB.

As one embodiment, the second communication device 410 comprises: a memory storing a computer-readable instruction program, the computer-readable instruction program, when executed by at least one processor, generating an action, and the action comprising: receiving a first wireless signal; and together with a reception of the first wireless signal, transmitting a first information block on a second cell, wherein as a response to each condition in a first set of conditions being satisfied, the first wireless signal is transmitted; the first set of conditions comprises a first condition, wherein the first condition is related to the link quality of at least a first cell; the first information block comprises at least one of SS, MIB and SIB1; and of the first cell and the second cell, at least the latter does not have a legitimate SIB1 or a legitimate SSB.

As one embodiment, at least one of the antenna 452, the transmitting device 454, the transmitting processor 468, and the controller/processor 459 is used for transmitting a first wireless signal.

As one embodiment, at least one of the antenna 420, the receiving device 418, the receiving processor 470, and the controller/processor 475 is used for receiving the first wireless signal.

As one embodiment, at least one of the antenna 452, the transmitting device 454, the transmitting processor 468, and the controller/processor 459 is used for transmitting a first measurement report.

As one embodiment, at least one of the antenna 420, the receiving device 418, the receiving processor 470, and the controller/processor 475 is used for receiving the first measurement report.

As one embodiment, at least one of the antenna 452, the receiving device 454, the receiving processor 456, and the controller/processor 459 is used for detecting a first information block.

As one embodiment, at least one of the antenna 452, the receiving device 454, the receiving processor 456, and the controller/processor 459 is used for receiving the first information block.

As one embodiment, at least one of the antenna 420, the transmitting device 418, the transmitting processor 416, and the controller/processor 475 is used for transmitting the first information block.

As one embodiment, at least one of the antenna 452, the receiving device 454, the receiving processor 456, and the controller/processor 459 is used for receiving a first threshold.

As one embodiment, at least one of the antenna 420, the transmitting device 418, the transmitting processor 416, and the controller/processor 475 is used for transmitting the first threshold.

As one embodiment, at least one of the antenna 452, the receiving device 454, the receiving processor 456, and the controller/processor 459 is used for receiving a second threshold.

As one embodiment, at least one of the antenna 420, the transmitting device 418, the transmitting processor 416, and the controller/processor 475 is used for transmitting the second threshold.

As one embodiment, at least one of the antenna 452, the receiving device 454, the receiving processor 456, and the controller/processor 459 is used for receiving a first message.

As one embodiment, at least one of the antenna 420, the transmitting device 418, the transmitting processor 416, and the controller/processor 475 is used for transmitting the first message.

As one embodiment, at least one of the antenna 452, the receiving device 454, the receiving processor 456, and the controller/processor 459 is used for receiving first signaling.

As one embodiment, at least one of the antenna 420, the transmitting device 418, the transmitting processor 416, and the controller/processor 475 is used for transmitting the first signaling.

As one embodiment, at least one of the antenna 452, the receiving device 454, the receiving processor 456, and the controller/processor 459 is used for performing a measurement for the first cell.

As one embodiment, at least one of the antenna 452, the receiving device 454, the receiving processor 456, and the controller/processor 459 is used for performing a measurement for the second cell.

As one embodiment, at least one of the antenna 452, the receiving device 454, the receiving processor 456, and the controller/processor 459 is used for performing a measurement of the first information block for the second cell.

As one embodiment, the first communication device 450 corresponds to the first node in the present application.

As one embodiment, the second communication device 410 corresponds to the second node in the present application.

As one embodiment, the second communication device 410 corresponds to the third node in the present application.

As one embodiment, the first communication device 450 corresponds to the first node in the present application, and the second communication device 410 corresponds to the second node in the present application.

As one embodiment, the first communication device 450 corresponds to the first node in the present application, and the second communication device 410 corresponds to the third node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

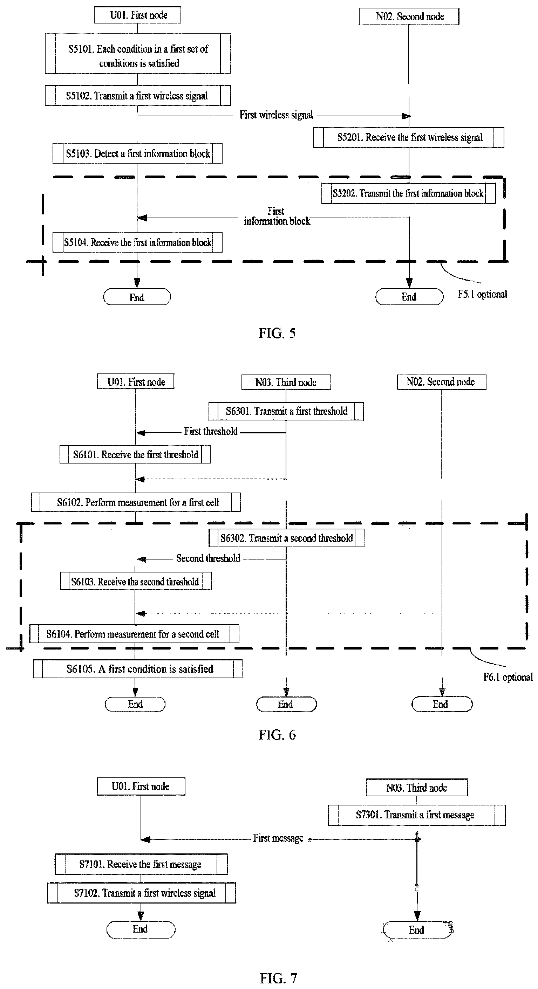

Embodiment 5 illustrates a flowchart of a wireless signal transmission according to one embodiment of the present application, as shown in FIG. 5. It is particularly noted that the order in this example does not limit the order of signal transmissions and the order of implementation in the present application.

For **a first node U01,** in step S5101, each condition in the first set of conditions being satisfied is determined; in step S5102, as a response to each condition in the first set of conditions being satisfied, a first wireless signal is transmitted; in step S5103, together with a transmission of the first wireless signal, a first information block is detected on a second cell; and in step S5104, the first information block is received.

For **a second node N02,** in step S5201, the first wireless signal is received; and in step S5202, the first information block is transmitted.

In Embodiment 5, the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB.

As one embodiment, the first node U01 is one piece of user equipment.

As one embodiment, the first node U01 is one base station device.

As one embodiment, the first node U01 is one relay device.

As one embodiment, the second node N02 is one base station device.

As one embodiment, the second node N02 is one piece of user equipment.

As one embodiment, the second node N02 is one relay device.

As one embodiment, the second node is a maintenance base station of the second cell.

As one embodiment, the first node U01 is one piece of user equipment, and the second node N02 is one base station device.

As one embodiment, the first node U01 is one piece of user equipment, and the second node N02 is one piece of user equipment.

As one embodiment, the first node U01 is one base station device, and the second node N02 is one base station device.

As one embodiment, a dotted block F5.1 is optional.

As one embodiment, the dotted block F5.1 exists.

As one embodiment, the first information block is received.

As one embodiment, the dotted block F5.1 does not exist.

As one embodiment, the first information block is not received.

### Embodiment 6

Embodiment 6 illustrates a flowchart of a first condition being satisfied according to one embodiment of the present application, as shown in FIG. 6. It is particularly noted that the order in this example does not limit the order of signal transmissions and the order of implementation in the present application.

For **a first node U01,** in step S6101, a first threshold is received; in step S6102, a measurement for the first cell is performed, the first condition comprising that a measurement result for the first cell is worse than or not better than the first threshold; in step S6103, a second threshold is received; in step S6104, a measurement for the second cell is performed, the first condition comprising that a measurement result for the second cell is better than or not worse than the second threshold; and in step S6105, the first condition being satisfied is determined.

For **a third node N03,** in step S6301, the first threshold is transmitted; and in step S6302, the second threshold is transmitted.

In Embodiment 6, the first set of conditions comprises at least the first one of a first condition or a second condition.

As one embodiment, the third node N03 and the second node are the same.

As one embodiment, the third node N03 and the second node are different.

As one embodiment, the third node N03 is one base station device.

As one embodiment, the third node N03 is one piece of user equipment.

As one embodiment, the third node N03 is one relay device.

As one embodiment, the third node N03 is a maintenance base station of the first cell.

As one embodiment, the third node N03 is a maintenance base station of one serving cell of the first node U01.

As one embodiment, the third node N03 is a maintenance base station of a PCell of the first node U01.

As one embodiment, the first cell is one serving cell of the first node U01.

As one embodiment, the first cell is a PCell of the first node U01.

As one embodiment, the first cell is a PSCell of the first node U01.

As one embodiment, the first cell is one SCell of the first node U01.

As one embodiment, the second cell is not a serving cell of the first node U01.

As one embodiment, the second cell is a serving cell of the first node U01.

As one embodiment, the second cell is a serving cell of the first node U01.

As one embodiment, the first node U01 is one piece of user equipment, the second node N02 is one base station device, and the second node N02 is one base station device.

As one embodiment, the first node U01 is one piece of user equipment, the second node N02 is one piece of user equipment, and the second node N02 is one piece of user equipment.

As one embodiment, the first node U01 is one base station device, the second node N02 is one base station device, and the second node N02 is one base station device.

As one embodiment, the behavior of performing a measurement for the first cell comprises: performing a measurement of at least one reference signal for the first cell.

As one embodiment, the behavior of performing a measurement for the first cell comprises: performing a measurement of at least one beam for the first cell.

As one embodiment, the behavior of performing a measurement for the first cell comprises: performing a measurement of only one beam for the first cell.

As one embodiment, the behavior of performing a measurement for the first cell comprises: acquiring a Layer 1 measurement result of the first cell.

As one embodiment, the behavior of performing a measurement for the first cell comprises: acquiring a Layer 3 measurement result of the first cell.

As one embodiment, any reference signal in the at least one reference signal of the first cell is an SSB or a CSI-RS (Channel State Information Reference Signal).

As one embodiment, any reference signal in the at least one reference signal of the first cell is any one of an SSB and a CSI-RS.

As one embodiment, the "worse than or not better than" means: less than or not greater than.

As one embodiment, the "worse than or not better than" means: lower than or not higher than.

As one embodiment, the "worse than or not better than" means: greater than or not smaller than.

As one embodiment, performing the measurement for the first cell is used for determining a measurement result for the first cell.

As one embodiment, a measurement result of the first cell is one RSRP (Reference Signal Received Power) or one RSRQ (Reference Signal Received Quality) or one SINR (Signal to Interference plus Noise Ratio, signal to interference plus noise ratio); and the first threshold is one RSRP threshold or one RSRQ threshold or one SINR threshold.

As one embodiment, a measurement result of the first cell is one SS-RSRP or one CSI-RSRP or one BLER (Block Error Ratio); and the first threshold is one SS-RSRP threshold or one CSI-RSRP threshold or one BLER threshold.

As one embodiment, a measurement result of the first cell is a value of one counter; and the first threshold is a positive integer.

As one embodiment, the one counter is N310.

As one embodiment, the one counter is N311.

As one embodiment, the one counter is BFI_COUNTER.

As one embodiment, a measurement result of the first cell is a value of one timer; and the first threshold is one time duration.

As one embodiment, the one timer is T310.

As one embodiment, the first threshold is configurable.

As one embodiment, the first threshold is pre-configured.

As one embodiment, the first threshold is configured by an RRC message.

As one embodiment, the first threshold is used for mobility.

As one embodiment, the first threshold is used for handover.

As one embodiment, the first threshold is used for LTM.

As one embodiment, the first threshold is used for cell selection.

As one embodiment, the first threshold is used for cell reselection.

As one embodiment, the first threshold is used for triggering a measurement.

As one embodiment, the first threshold is used for triggering a measurement report.

As one embodiment, the behavior of performing a measurement for the second cell comprises: performing a measurement of at least one reference signal for the second cell.

As one embodiment, the behavior of performing a measurement for the second cell comprises: performing a measurement of at least one beam for the second cell.

As one embodiment, the behavior of performing a measurement for the second cell comprises: performing a measurement of only one beam for the second cell.

As one embodiment, the behavior of performing a measurement for the second cell comprises: acquiring a Layer 1 measurement result of the second cell.

As one embodiment, the behavior of performing a measurement for the second cell comprises: acquiring a Layer 3 measurement result of the second cell.

As one embodiment, any reference signal in the at least one reference signal of the second cell is an SSB or a CSI-RS.

As one embodiment, any reference signal in the at least one reference signal of the second cell is any one of an SSB and a CSI-RS.

As one embodiment, the "better than or not worse than" means: greater than or not smaller than.

As one embodiment, the "better than or not worse than" means: higher than or not lower than.

As one embodiment, the "better than or not worse than" means: smaller than or not greater than.

As one embodiment, performing a measurement for the second cell is used for determining a measurement result for the second cell.

As one embodiment, a measurement result of the second cell is one RSRP or one RSRQ or one SINR; and the second threshold is one RSRP threshold or one RSRQ threshold or one SINR threshold.

As one embodiment, a measurement result of the second cell is one SS-RSRP or one CSI-RSRP or one BLER; and the second threshold is one SS-RSRP threshold or one CSI-RSRP threshold or one BLER threshold.

As one embodiment, a measurement result of the second cell is a value of one counter; and the second threshold is a positive integer.

As one embodiment, the one counter is N310.

As one embodiment, the one counter is N311.

As one embodiment, the one counter is BFI_COUNTER.

As one embodiment, a measurement result of the second cell is a value of one timer; and the second threshold is one time duration.

As one embodiment, the one timer is T310.

As one embodiment, the second threshold is configurable.

As one embodiment, the second threshold is pre-configured.

As one embodiment, the second threshold is configured by an RRC message.

As one embodiment, a dotted block F6.1 is optional.

As one embodiment, the dotted block F6.1 exists.

As one embodiment, the first threshold and the second threshold are both configured.

As one embodiment, the first threshold and the second threshold are equal.

As one embodiment, the first threshold and the second threshold are not equal.

As one embodiment, the first threshold and the second threshold are the same in unit.

As one embodiment, the first threshold and the second threshold are the same in dimension.

As one embodiment, the first condition comprises that a measurement result for the first cell is worse than the first threshold, and a measurement result for the second cell is not worse than the second threshold.

As one embodiment, the first condition comprises that a measurement result for the first cell is not better than the first threshold, and a measurement result for the second cell is better than the second threshold.

As one embodiment, the first condition is satisfied at least when a measurement result for the first cell is worse than or not better than the first threshold and a measurement result for the second cell is better than or not worse than the second threshold.

As one sub-embodiment of this embodiment, the first condition is satisfied only when a measurement result for the first cell is worse than or not better than the first threshold and a measurement result for the second cell is better than or not worse than the second threshold.

As one sub-embodiment of this embodiment, if a measurement result for the first cell is better than the first threshold, or a measurement result for the second cell is worse than the second threshold, the first condition is not satisfied.

As one embodiment, the dotted block F6.1 does not exist.

As one embodiment, only the first one of the first threshold and the second threshold is configured.

As one embodiment, the first condition is irrelevant to a measurement result for the second cell.

As one embodiment, any condition in the first set of conditions is irrelevant to a measurement result for the second cell.

As one embodiment, the first condition is satisfied as long as a measurement result for the first cell is worse than or not better than the first threshold.

As one embodiment, the present embodiment does not limit whether a sender of the first threshold and a sender of the second threshold are the same.

### Embodiment 7

Embodiment 7 illustrates a flowchart of a wireless signal transmission of a first message according to one embodiment of the present application, as shown in FIG. 7. It is particularly noted that the order in this example does not limit the order of signal transmissions and the order of implementation in the present application.

For **a first node U01,** in step S7101, a first message is received; and in step S7102, the first wireless signal is transmitted.

For **a third node N03,** in step S7301, the first message is transmitted.

In Embodiment 7, the first message is used for determining a first resource block, and the first resource block is used for transmitting the first wireless signal.

As one embodiment, the third node N03 is the second node.

As one embodiment, the third node N03 is the second node, and the first message is an MIB message.

As one embodiment, the third node N03 is not the second node.

As one embodiment, the third node N03 is not the second node, and the first message is an SIB1 message.

As one embodiment, the third node N03 is not the second node, and the first message is an RRCReconfiguration message.

As one embodiment, the first message comprises an RRC message.

As one embodiment, the first message is one RRC message.

As one embodiment, the first message is one broadcast message.

As one embodiment, the first message is transmitted through a BCCH (Broadcast Control Channel).

As one embodiment, the first message comprises an MIB message.

As one embodiment, the first message is an MIB message.

As one embodiment, the first message comprises one MIB message, and a pdcch-ConfigSIB1 field in the one MIB message is used for determining the first resource block.

As one embodiment, the first message comprises one MIB message, and an ssb-SubcarrierOffset field in the one MIB message is used for determining the first resource block.

As one embodiment, the first message comprises one MIB message, and a pdcch-ConfigSIB1 field and an ssb-SubcarrierOffset field in the one MIB message are used for determining the first resource block.

As one embodiment, the first message is an SIB1 message.

As one embodiment, the first message is one SIB.

As one embodiment, the first message is a unicast message.

As one embodiment, the first message is transmitted through a DCCH (Dedicated Control Channel).

As one embodiment, the first message is an RRCReconfiguration message.

As one embodiment, the first message is an RRCResume message.

As one embodiment, the first message is an RRCSetup message.

As one embodiment, the first message comprises a MAC CE (Control Element).

As one embodiment, the first message indicates the first resource block.

As one embodiment, the first message comprises configuration information of the first resource block.

As one embodiment, the first message is used for determining a time domain resource of the first resource block.

As one embodiment, the first message is used for determining a frequency domain resource of the first resource block.

As one embodiment, the first resource block bears the first wireless signal.

As one embodiment, the first wireless signal is transmitted on the first resource block.

As one embodiment, the first resource block comprises one time-frequency resource block.

As one embodiment, the first resource block is one uplink transmitting opportunity.

As one embodiment, the first resource block is one PRACH occasion.

As one embodiment, the first resource block is one resource block in a first resource block set, and the first resource block set is periodic on a time domain.

As one embodiment, the first resource block is configured to the second cell.

As one embodiment, the first resource block is configured to one BWP (Bandwidth Part) of the second cell.

As one embodiment, the first resource block is configured to one uplink (UL) carrier of the second cell.

As one embodiment, the first resource block is configured to a sidelink (SL) carrier.

As one embodiment, the first resource block comprises an uplink resource.

As one embodiment, the first resource block is a physical layer resource.

As one embodiment, the first resource block is Cell Specific.

As one embodiment, the first resource block is UE Specific.

As one embodiment, the first resource block is an SRS (Sounding Reference Signal) resource.

As one embodiment, the first resource block comprises a PRACH (Physical Random Access Channel) resource.

As one embodiment, the first resource block comprises a PUCCH (Physical Uplink Control Channel) resource.

As one embodiment, the first resource block comprises a PUSCH (Physical Uplink Shared Channel) resource.

As one embodiment, the first resource block indicates one SIB.

As one embodiment, the first resource block is associated with one SIB.

As one embodiment, the first resource block indicates an SSB of the second cell.

As one embodiment, the first resource block is associated with an SSB of the second cell.

As one embodiment, the first resource block is used for a UE WUS (wake up signal).

As one embodiment, the first resource block is used for an uplink WUS (wake up signal).

As one embodiment, the first resource block is configured to a WUS signal.

As one embodiment, the present embodiment does not limit the sender of the first message.

### Embodiment 8

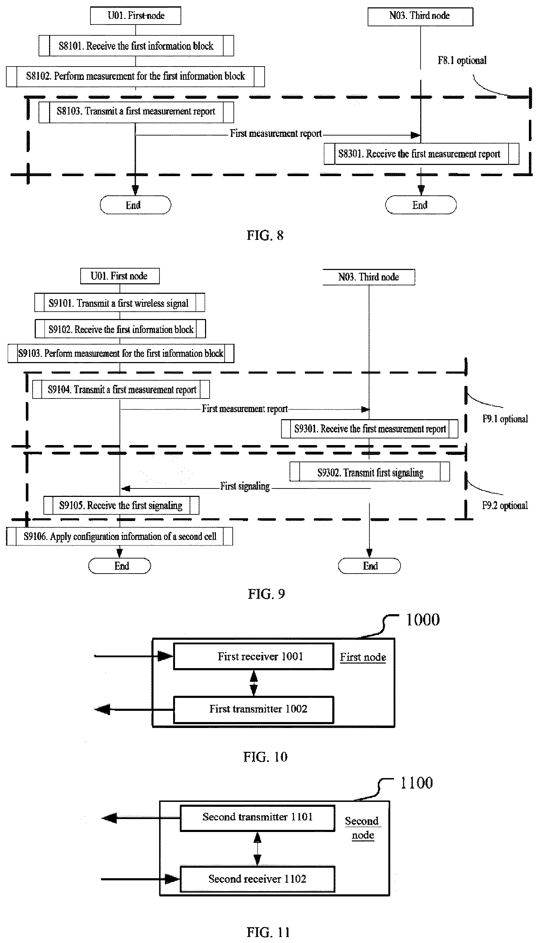

Embodiment 8 illustrates a flowchart of a wireless signal transmission of a first measurement report according to one embodiment of the present application, as shown in FIG. 8. It is particularly noted that the order in this example does not limit the order of signal transmissions and the order of implementation in the present application.

For **a first node U01,** in step S8101, a first information block is received; in step S8102, as a response to a reception of the first information block, a measurement of the first information block for the second cell is performed; in step S8103, a first measurement report is transmitted; and
for **a third node N03,** in step S8301, the first measurement report is received.

In Embodiment 8, the first measurement report comprises a measurement result of the measurement of the first information block for the second cell.

As one embodiment, "detecting the first information block on the second cell" is used for receiving the first information block.

As one embodiment, the behavior of performing a measurement of the first information block for the second cell comprises: determining one measurement result according to the first information block of the second cell.

As one embodiment, the behavior of receiving the first information block triggers the behavior of performing the measurement of the first information block for the second cell.

As one embodiment, a dotted block F8.1 is optional.

As one embodiment, the dotted block F8.1 does not exist.

As one embodiment, the behavior of performing the measurement of the first information block for the second cell does not trigger the first measurement report.

As one embodiment, the dotted block F8.1 exists.

As one embodiment, the behavior of performing the measurement of the first information block for the second cell triggers the first measurement report.

As one embodiment, the first measurement report comprises a measurement result of at least one cell.

As one embodiment, the first measurement report only comprises a measurement result of the second cell.

As one embodiment, the first measurement report comprises measurement results of multiple cells, and the second cell is one cell in the multiple cells.

As one embodiment, the first measurement report comprises one measurement result determined according to the first information block of the second cell.

As one embodiment, the first measurement report is an RRC message.

As one sub-embodiment of this embodiment, the first measurement report is used for Layer 3 handover.

As one sub-embodiment of this embodiment, a measurement result comprised in the first measurement report undergoes Layer 3 filtering.

As one sub-embodiment of this embodiment, the first measurement report comprises a measurement result of the Layer 3.

As one sub-embodiment of this embodiment, the first measurement report is one MeasurementReport message.

As one embodiment, the first measurement report is signaling below an RRC sublayer.

As one sub-embodiment of this embodiment, the first measurement report is used for LTM.

As one sub-embodiment of this embodiment, the first measurement report is physical layer signaling.

As one sub-embodiment of this embodiment, the first measurement report is MAC sublayer signaling.

As one sub-embodiment of this embodiment, the first measurement report is a MAC CE.

As one sub-embodiment of this embodiment, the first measurement report comprises a measurement result of the Layer 1.

As one sub-embodiment of this embodiment, a measurement result comprised in the first measurement report does not undergo Layer 3 filtering.

As one sub-embodiment of this embodiment, the first measurement report is transmitted through a PUCCH resource.

As one sub-embodiment of this embodiment, the first measurement report is transmitted through a PUSCH resource.

As one sub-embodiment of this embodiment, the first measurement report is transmitted through an SRS resource.

As one sub-embodiment of this embodiment, the first measurement report is transmitted through a resource used for CSI reporting.

As one sub-embodiment of this embodiment, the first measurement report is one MAC CE.

As one sub-embodiment of this embodiment, the first measurement report is one piece of UCI (Uplink Control Information).

### Embodiment 9

Embodiment 9 illustrates a flowchart of a wireless signal transmission of applying configuration information of a second cell according to one embodiment of the present application, as shown in FIG. 9. It is particularly noted that the order in this example does not limit the order of signal transmissions and the order of implementation in the present application.

For **a first node U01,** in step S9101, as a response to each condition in a first set of conditions being satisfied, the first wireless signal is transmitted; in step S9102, together with a transmission of the first wireless signal, the first information block is received on the second cell; in step S9103, as a response to a reception of the first information block, a measurement of the first information block for the second cell is performed; in step S9104, a first measurement report is transmitted, the first measurement report comprising a measurement result of the measurement of the first information block for the second cell; in step S9105, first signaling is received, the first signaling indicating the second cell; and in step S9106, configuration information of the second cell is applied.

For **a third node N03,** in step S9301, the first measurement report is received; and in step S9302, the first signaling is transmitted.

In Embodiment 9, the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB; and the configuration information of the second cell comprises a physical cell identify of the second cell.

As one embodiment, a dotted block F9.1 is optional.

As one embodiment, the dotted block F9.1 exists.

As one embodiment, the dotted block F9.1 does not exist.

As one embodiment, a dotted block F9.2 is optional.

As one embodiment, the dotted block F9.2 exists.

As one embodiment, the dotted block F9.2 does not exist.

As one embodiment, a step in the dotted block F9.2 is before the step S9103; and the dotted block F9.1 does not exist, and the dotted block F9.2 exists.

As one sub-embodiment of this embodiment, the step in the dotted block F9.2 is before the step S9101.

As one sub-embodiment of this embodiment, as a response to performing the measurement of the first information block for the second cell, configuration information of the second cell is applied.

As one sub-embodiment of this embodiment, a measurement result of the measurement of the first information block for the second cell is used for triggering the application of the configuration information of the second cell.

As one sub-embodiment of this embodiment, the first measurement report in the present application is not transmitted.

As one sub-embodiment of this embodiment, the first measurement report in the present application is not triggered.

As one sub-embodiment of this embodiment, the behavior of applying configuration information of the second cell does not depend on any signaling received from the third node N03 after the first signaling.

As one sub-embodiment of this embodiment, within a time interval from the behavior of receiving the first signaling to the behavior of applying configuration information of the second cell, the first node U01 does not transmit a measurement report.

As one sub-embodiment of this embodiment, the phrase "as a response to performing the measurement of the first information block for the second cell" comprises: as a response to that a measurement result of performing the measurement of the first information block for the second cell satisfies a performing condition.

As one sub-embodiment of this embodiment, when a measurement result of the measurement of the first information block for the second cell satisfies a performing condition, configuration information of the second cell is applied.

As one sub-embodiment of this embodiment, the performing condition comprises at least one of a first given threshold or a second given threshold; and the first given threshold is for the first cell, and the second given threshold is for the second cell.

As one sub-embodiment of this embodiment, the performing condition comprises: a measurement result of the measurement of the first information block for the second cell is better than or not worse than the second given threshold.

As one sub-embodiment of this embodiment, the performing condition comprises: a measurement result of the measurement of the first information block for the second cell is better than or not worse than the second given threshold, and a measurement result for the first cell is worse than or not better than the first given threshold.

As one sub-embodiment of this embodiment, the second cell is one candidate cell.

As one sub-embodiment of this embodiment, the second cell is a candidate cell of the first cell. As one sub-embodiment of this embodiment, the first signaling is used for configuring the second cell.

As one sub-embodiment of this embodiment, the first signaling indicates the configuration information of the second cell.

As one sub-embodiment of this embodiment, the first signaling comprises the configuration information of the second cell.

As one sub-embodiment of this embodiment, the first signaling comprises at least one RRC message.

As one sub-embodiment of this embodiment, the first signaling comprises at least one RRC IE (Information Element).

As one sub-embodiment of this embodiment, the first signaling comprises at least one RRC field.

As one sub-embodiment of this embodiment, the first signaling comprises an RRCReconfiguration message.

As one sub-embodiment of this embodiment, the first signaling comprises one CellGroupConfig IE, and the one CellGroupConfig IE is configured to the second cell.

As one sub-embodiment of this embodiment, the first signaling comprises one cellGroupld field, and the one cellGroupId field indicates a cell group to which the second cell belongs.

As one sub-embodiment of this embodiment, the first signaling comprises one SpCellConfig field, and the one SpCellConfig field indicates configuration information of the second cell.

As one sub-embodiment of this embodiment, the first signaling comprises one reconfigurationWithSync field, and the one reconfigurationWithSync field indicates synchronous reconfiguration information of the second cell.

As one sub-embodiment of this embodiment, the first signaling comprises one ServingCellConfigCommon IE, and the one ServingCellConfigCommon IE indicates common configuration information of the second cell.

As one sub-embodiment of this embodiment, the first signaling comprises one DownlinkConfigCommon IE, and the one DownlinkConfigCommon IE indicates common configuration information of a downlink of the second cell.

As one sub-embodiment of this embodiment, the first signaling comprises one UplinkConfigCommon IE, and the one UplinkConfigCommon IE indicates common configuration information of an uplink of the second cell.

As one sub-embodiment of this embodiment, the first signaling comprises one BWP-UplinkCommon IE, and the one BWP-UplinkCommon IE indicates common configuration information of an initial uplink BWP of the second cell.

As one sub-embodiment of this embodiment, the first signaling comprises one BWP-DownlinkCommon IE, and the one BWP-DownlinkCommon IE indicates common configuration information of an initial downlink BWP of the second cell.

As one sub-embodiment of this embodiment, the first signaling comprises one PhysCellId IE, and the one PhysCellId IE indicates the physical cell identify of the second cell.

As one sub-embodiment of this embodiment, the behavior of applying configuration information of the second cell comprises: applying the configuration information of the second cell in the first signaling.

As one sub-embodiment of this embodiment, the behavior of applying configuration information of the second cell comprises: applying the configuration information of the second cell indicated by the first signaling.

As one sub-embodiment of this embodiment, the behavior of applying configuration information of the second cell comprises: applying the configuration information of the second cell in a first storage variable.

As one sub-embodiment of this embodiment, as a response to the first signaling being received, the configuration information of the second cell is stored in the first storage variable.

As one sub-embodiment of this embodiment, as a response to the first signaling being received, the configuration information of the second cell is updated in the first storage variable.

As one sub-embodiment of this embodiment, the first signaling is used for the mobility of the Layer 3.

As one dependent embodiment of this sub-embodiment, the second cell is a CHO candidate cell of the first cell. As one dependent embodiment of this sub-embodiment, the second cell is a CPC candidate cell of the first cell.

As one dependent embodiment of this sub-embodiment, the measurement of the first information block for the second cell is Layer 3 measurement.

As one dependent embodiment of this sub-embodiment, a measurement result of the measurement of the first information block for the second cell is at least one of RSRP or RSRQ or SINR.

As one dependent embodiment of this sub-embodiment, the first storage variable is VarConditionalReconfig.

As one dependent embodiment of this sub-embodiment, the first given threshold is one RSRP threshold or one RSRQ threshold or one SINR threshold.

As one dependent embodiment of this sub-embodiment, the second given threshold is one RSRP threshold or one RSRQ threshold or one SINR threshold.

As one dependent embodiment of this sub-embodiment, the performing condition comprises an A3 event (Event A3).

As one dependent embodiment of this sub-embodiment, the performing condition comprises an A4 event (Event A4).

As one dependent embodiment of this sub-embodiment, the performing condition comprises an A5 event (Event A5). As one sub-embodiment of this embodiment, the first signaling is used for LTM.

As one dependent embodiment of this sub-embodiment, the second cell is a candidate cell of the first cell used for LTM.

As one dependent embodiment of this sub-embodiment, the measurement of the first information block for the second cell is Layer 1 measurement.

As one dependent embodiment of this sub-embodiment, a measurement result of the measurement of the first information block for the second cell is at least one of SS-RSRP or CSI-RSRP or BLER.

As one dependent embodiment of this sub-embodiment, a name of the first storage variable comprises at least the first one of Var or config or LTM.

As one dependent embodiment of this sub-embodiment, the first given threshold is one SS-RSRP threshold or one CSI-RSRP threshold or one BLER threshold.

As one dependent embodiment of this sub-embodiment, the second given threshold is one SS-RSRP threshold or one CSI-RSRP threshold or one BLER threshold.

As one embodiment, the step in the dotted block F9.2 is after the step in the dotted block F9.1; and the dotted block F9.1 exists, and the dotted block F9.2 exists.

As one sub-embodiment of this embodiment, as a response to a reception of the first signaling, configuration information of the second cell is applied.

As one sub-embodiment of this embodiment, at least after the first signaling is received, configuration information of the second cell is applied.

As one sub-embodiment of this embodiment, when the first signaling is received, configuration information of the second cell is applied.

As one sub-embodiment of this embodiment, the first signaling is used for determining to apply configuration information of the second cell.

As one sub-embodiment of this embodiment, at least after the first measurement report is transmitted, the first signaling is received.

As one sub-embodiment of this embodiment, the first measurement report triggers the first signaling.

As one sub-embodiment of this embodiment, as a response to performing the measurement of the first information block for the second cell, a first measurement report is transmitted; and as a response to a transmission of the first measurement report, the first signaling is received.

As one sub-embodiment of this embodiment, the first signaling is used for configuring the second cell.

As one sub-embodiment of this embodiment, the first signaling indicates configuration information of the second cell.

As one sub-embodiment of this embodiment, the first signaling indicates that the first node U01 moves to the second cell.

As one sub-embodiment of this embodiment, the first signaling indicates the first node U01 to access the second cell.

As one sub-embodiment of this embodiment, the first measurement report and the first signaling are used for the mobility of Layer 3.

As one dependent embodiment of this sub-embodiment, the first measurement report and the first signaling are used for Layer 3 handover.

As one dependent embodiment of this sub-embodiment, the first measurement report is an RRC message.

As one dependent embodiment of this sub-embodiment, the behavior of applying configuration information of the second cell comprises: applying the configuration information of the second cell in the first signaling.

As one dependent embodiment of this sub-embodiment, the behavior of applying configuration information of the second cell comprises: applying the configuration information of the second cell indicated by the first signaling.

As one dependent embodiment of this sub-embodiment, the first signaling comprises a configuration identify of the second cell.

As one dependent embodiment of this sub-embodiment, the first signaling comprises an identify of the second cell.

As one dependent embodiment of this sub-embodiment, the first signaling comprises one RRC message.

As one dependent embodiment of this sub-embodiment, the first signaling comprises one RRCReconfiguration message.

As one dependent embodiment of this sub-embodiment, the first signaling comprises one RRCConnectionReconfiguration message.

As one dependent embodiment of this sub-embodiment, the first signaling is one RRCReconfiguration message comprising a reconfigurationWithSync field, and the reconfiguration With Sync field indicates synchronous reconfiguration information of the second cell.

As one dependent embodiment of this sub-embodiment, the first signaling comprises one PhysCellId IE, and the one PhysCellId IE indicates the physical cell identify of the second cell.

As one dependent embodiment of this sub-embodiment, the first signaling is one RRCReconfiguration message, the one RRCReconfiguration message comprises one spCellConfig field, the one spCellConfig field comprises one reconfigurationWithSync field, the reconfigurationWithSync field comprises one PhysCellId IE, and the one PhysCellId IE indicates the physical cell identify of the second cell.

As one sub-embodiment of this embodiment, the first measurement report and the first signaling are used for LTM.

As one dependent embodiment of this sub-embodiment, the behavior of applying configuration information of the second cell comprises: applying the configuration information of the second cell in the first RRC message.

As one dependent embodiment of this sub-embodiment, the behavior of applying configuration information of the second cell comprises: applying the configuration information of the second cell in the first storage variable.

As one dependent embodiment of this sub-embodiment, as a response to the first RRC message being received, the configuration information of the second cell is stored in the first storage variable.

As one dependent embodiment of this sub-embodiment, in response to the first RRC message being received, the configuration information of the second cell is updated in the first storage variable.

As one dependent embodiment of this sub-embodiment, at least before the first measurement report is transmitted, the first RRC message is received.

As one dependent embodiment of this sub-embodiment, before the first wireless signal is transmitted, the first RRC message is received.

As one dependent embodiment of this sub-embodiment, a name of the first storage variable comprises at least the first one of Var or config or LTM.

As one dependent embodiment of this sub-embodiment, the first RRC message comprises an RRCReconfiguration message.

As one dependent embodiment of this sub-embodiment, the first RRC message comprises one CellGroupConfig IE, and the one CellGroupConfig IE is configured to the second cell.

As one dependent embodiment of this sub-embodiment, the first RRC message comprises one cellGroupId field, and the one cellGroupId field indicates a cell group to which the second cell belongs.

As one dependent embodiment of this sub-embodiment, the first RRC message comprises one SpCellConfig field, and the one SpCellConfig field indicates configuration information of the second cell.

As one dependent embodiment of this sub-embodiment, the first RRC message comprises one reconfigurationWithSync field, and the one reconfigurationWithSync field indicates synchronous reconfiguration information of the second cell.

As one dependent embodiment of this sub-embodiment, the first RRC message comprises one ServingCellConfigCommon IE, and the one ServingCellConfigCommon IE indicates common configuration information of the second cell.

As one dependent embodiment of this sub-embodiment, the first RRC message comprises one DownlinkConfigCommon IE, and the one DownlinkConfigCommon IE indicates common configuration information of a downlink of the second cell.

As one dependent embodiment of this sub-embodiment, the first RRC message comprises one UplinkConfigCommon IE, and the one UplinkConfigCommon IE indicates common configuration information of an uplink of the second cell.

As one dependent embodiment of this sub-embodiment, the first RRC message comprises one BWP-UplinkCommon IE, and the one BWP-UplinkCommon IE indicates common configuration information of an initial uplink BWP of the second cell.

As one dependent embodiment of this sub-embodiment, the first RRC message comprises one BWP-DownlinkCommon IE, and the one BWP-DownlinkCommon IE indicates common configuration information of an initial downlink BWP of the second cell.

As one dependent embodiment of this sub-embodiment, the first RRC message comprises one PhysCellId IE, and the one PhysCellId IE indicates the physical cell identify of the second cell.

As one dependent embodiment of this sub-embodiment, the second cell is a candidate cell of the first cell used for LTM.

As one dependent embodiment of this sub-embodiment, the second cell is one candidate cell.

As one dependent embodiment of this sub-embodiment, the first measurement report is signaling below the RRC sublayer.

As one dependent embodiment of this sub-embodiment, the first signaling indicates one identify of the second cell.

As one dependent embodiment of this sub-embodiment, the first signaling indicates an identify of a candidate configuration of the second cell.

As one dependent embodiment of this sub-embodiment, the first signaling indicates a PCI of the second cell.

As one dependent embodiment of this sub-embodiment, the first signaling indicates a candidate cell identify of the second cell.

As one dependent embodiment of this sub-embodiment, the first signaling indicates a random access resource used for CFRA.

As one dependent embodiment of this sub-embodiment, the first signaling indicates one TA (Timing Advance) of the second cell.

As one dependent embodiment of this sub-embodiment, the first signaling indicates one TCI of the second cell.

As one dependent embodiment of this sub-embodiment, the first signaling is one piece of DCI.

As one dependent embodiment of this sub-embodiment, the first signaling is one MAC CE.

### Embodiment 10

Embodiment 10 illustrates a structural block diagram of a processing device used in a first node according to one embodiment of the present application, as shown in FIG. 10. In FIG. 10, a processing device 1000 in the first node comprises a first receiver 1001 and a first transmitter 1002.

The first transmitter 1002 transmits a first wireless signal as a response to each condition in a first set of conditions being satisfied;
the first receiver 1001 detects a first information block on a second cell together with a transmission of the first wireless signal;
in Embodiment 10, the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB.

As one embodiment, the first receiver 1001 receives a first threshold; and performs a measurement for the first cell, wherein the first condition comprises that a measurement result for the first cell is worse than or not better than the first threshold.

As one embodiment, the first receiver 1001 receives a second threshold; and performs a measurement for the second cell, wherein the first condition comprises that a measurement result for the second cell is better than or not worse than the second threshold.

As one embodiment, the first receiver 1001 receives a first message; wherein the first message is used for determining a first resource block, and the first resource block is used for transmitting the first wireless signal.

As one embodiment, the first receiver 1001 receives the first information block; and performs a measurement of the first information block for the second cell as a response to a reception of the first information block.

As one embodiment, the first transmitter 1002 transmits a first measurement report, wherein the first measurement report comprises a measurement result of the measurement of the first information block for the second cell.

As one embodiment, the first receiver 1001 receives first signaling, the first signaling indicating the second cell; and applies configuration information of the second cell as a response to a reception of the first signaling; or applies configuration information of the second cell as a response to performing the measurement of the first information block for the second cell, wherein the configuration information of the second cell comprises a physical cell identify of the second cell.

As one embodiment, the first receiver 1001 comprises an antenna 452, a receiving device 454, a multi-antenna receiving processor 458, a receiving processor 456, a controller/processor 459, a memory 460, and a data source 467 in FIG. 4 of the present application.

As one embodiment, the first receiver 1001 comprises an antenna 452, a receiving device 454, a multi-antenna receiving processor 458, and a receiving processor 456 in FIG. 4 of the present application.

As one embodiment, the first receiver 1001 comprises an antenna 452, a receiving device 454, and a receiving processor 456 in FIG. 4 of the present application.

As one embodiment, the first transmitter 1002 comprises an antenna 452, a transmitting device 454, a multi-antenna transmitting processor 457, a transmitting processor 468, a controller/processor 459, a memory 460, and a data source 467 in FIG. 4 of the present application.

As one embodiment, the first transmitter 1002 comprises an antenna 452, a transmitting device 454, a multi-antenna transmitting processor 457, and a transmitting processor 468 in FIG. 4 of the present application.

As one embodiment, the first transmitter 1002 comprises an antenna 452, a transmitting device 454, and a transmitting processor 468 in FIG. 4 of the present application.

### Embodiment 11

Embodiment 11 illustrates a structural block diagram of a processing device used in a second node according to one embodiment of the present application, as shown in FIG. 11. In FIG. 11, a processing device 1100 in the second node comprises a second transmitter 1101 and a second receiver 1102.

The second receiver 1102 receives a first wireless signal;
the second transmitter 1101 transmits a first information block on a second cell together with a reception of the first wireless signal;
in Embodiment 11, as a response to each condition in a first set of conditions being satisfied, the first wireless signal is transmitted; the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB.

As one embodiment, the first condition comprises that a measurement result for the first cell is worse than or not better than a first threshold; a sender of the first wireless signal receives the first threshold; and the sender of the first wireless signal performs a measurement for the first cell.

As one embodiment, the second transmitter 1101 transmits the first threshold.

As one embodiment, a third transmitter transmits the first threshold; and the third node comprises the third transmitter.

As one embodiment, the first condition comprises that a measurement result for the second cell is better than or not worse than a second threshold; the sender of the first wireless signal receives the second threshold; and the sender of the first wireless signal performs a measurement for the second cell.

As one embodiment, the second transmitter 1101 transmits the second threshold.

As one embodiment, a third transmitter transmits the second threshold; and the third node comprises the third transmitter.

As one embodiment, a first message indicates a first resource block, the first resource block being used for transmitting the first wireless signal; and a sender of the first wireless signal receives the first message.

As one embodiment, the second transmitter 1101 transmits the first message.

As one embodiment, a third transmitter transmits the first message; and the third node comprises the third transmitter.

As one embodiment, a sender of the first wireless signal receives the first information block; and as a response to the first information block being received, the sender of the first wireless signal performs a measurement of the first information block for the second cell.

As one embodiment, a sender of the first wireless signal transmits a first measurement report; and the first measurement report comprises a measurement result of the measurement of the first information block for the second cell.

As one embodiment, the second transmitter 1101 receives the first measurement report.

As one embodiment, a third transmitter receives the first measurement report; and the third node comprises the third transmitter.

As one embodiment, a sender of the first wireless signal receives first signaling, the first signaling indicating the second cell; and as a response to the first signaling being received, the sender of the first wireless signal applies configuration information of the second cell; or as a response to the measurement of the first information block for the second cell being performed, the sender of the first wireless signal applies configuration information of the second cell; and the configuration information of the second cell comprises a physical cell identify of the second cell.

As one embodiment, the second transmitter 1101 transmits the first signaling.

As one embodiment, a third transmitter transmits the first signaling; and the third node comprises the third transmitter.

As one embodiment, the first set of conditions comprises a second condition, and the second condition comprises that the second cell is a network energy-saving cell.

As one embodiment, the second transmitter 1101 comprises an antenna 420, a transmitting device 418, a multi-antenna transmitting processor 471, a transmitting processor 416, a controller/processor 475, and a memory 476 in FIG. 4 of the present application.

As one embodiment, the second transmitter 1101 comprises an antenna 420, a transmitting device 418, a multi-antenna transmitting processor 471, and a transmitting processor 416 in FIG. 4 of the present application.

As one embodiment, the second transmitter 1101 comprises an antenna 420, a transmitting device 418, and a transmitting processor 416 in FIG. 4 of the present application.

As one embodiment, the second receiver 1102 comprises an antenna 420, a receiving device 418, a multi-antenna receiving processor 472, a receiving processor 470, a controller/processor 475, and a memory 476 in FIG. 4 of the present application.

As one embodiment, the second receiver 1102 comprises an antenna 420, a receiving device 418, a multi-antenna receiving processor 472, and a receiving processor 470 in FIG. 4 of the present application.

As one embodiment, the second receiver 1102 comprises an antenna 420, a receiving device 418, and a receiving processor 470 in FIG. 4 of the present application.

Those skilled in the art will appreciate that all or some of the steps in the above-mentioned method may be implemented by instructing relevant hardware by a program, where the program can be stored in a computer-readable storage medium, such as a read-only memory, a hard disk, or an optical disk, etc. Optionally, all or some of the steps of the above-mentioned embodiments may also be implemented using one or more integrated circuits. Correspondingly, each module unit in the above-mentioned embodiments can be implemented either in a hardware form or as software functional modules. The present application is not limited to any specific form of combinations of hardware and software. The user equipment, terminals and UE in the present application include but are not limited to wireless communication devices such as drones, communication modules on drones, remote-controlled aircrafts, air vehicles, small aircrafts, mobile phones, tablet computers, notebook computers, vehicle communication devices, wireless sensors, internet cards, Internet of Things terminals, RFID terminals, NB-IOT terminals, MTC (Machine Type Communication) terminals, eMTC (enhanced MTC) terminals, data cards, internet cards, vehicle communication devices, low-cost mobile phones, and low-cost tablet computers. The base station or system equipment in the present application includes but is not limited to wireless communication devices such as macro cellular base stations, micro cellular base stations, Femtocell, relay base stations, gNB (NR Node B) NR Node B, and TRPs (Transmitter Receiver Points).

The above is only a preferred embodiment of the present application and is not intended to limit the scope of protection of the present application. Any modifications, equivalent substitutions, improvements and the like made within the spirit and principles of the present application shall be included within the scope of protection of the present application.

## Claims

1. A first node used for wireless communication, comprising:
a first transmitter for transmitting a first wireless signal as a response to each condition in a first set of conditions being satisfied;
and a first receiver for detecting a first information block on a second cell together with a transmission of the first wireless signal,
wherein the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB.

2. The first node according to claim 1, comprising:
the first receiver for receiving a first threshold, and performing a measurement for the first cell,
wherein the first condition comprises that a measurement result for the first cell is worse than or not better than the first threshold.

3. The first node according to claim 1 or 2, comprising:
the first receiver for receiving a second threshold, and performing a measurement for the second cell,
wherein the first condition comprises that a measurement result for the second cell is better than or not worse than the second threshold.

4. The first node according to any one of claims 1 to 3, comprising the first receiver for receiving a first message,
wherein the first message is used for determining a first resource block, and the first resource block is used for transmitting the first wireless signal.

5. The first node according to any one of claims 1 to 4, comprising:
the first receiver for receiving the first information block, and performing a measurement of the first information block for the second cell as a response to a reception of the first information block.

6. The first node according to any one of claims 1 to 5, comprising:
the first transmitter for transmitting a first measurement report,
wherein the first measurement report comprises a measurement result of the measurement of the first information block for the second cell.

7. The first node according to any one of claims 1 to 6, comprising:
the first receiver for receiving first signaling, the first signaling indicating the second cell; and applying configuration information of the second cell as a response to a reception of the first signaling; or applying configuration information of the second cell as a response to performing the measurement of the first information block for the second cell,
wherein the configuration information of the second cell comprises a physical cell identify of the second cell.

8. A second node used for wireless communication, comprising:
a second receiver for receiving a first wireless signal;
and a second transmitter for transmitting a first information block on a second cell together with a reception of the first wireless signal,
wherein as a response to each condition in a first set of conditions being satisfied, the first wireless signal is transmitted; the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB.

9. A method used in a first node for wireless communication, comprising:
as a response to each condition in a first set of conditions being satisfied, transmitting a first wireless signal;
and together with a transmission of the first wireless signal, detecting a first information block on a second cell,
wherein the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB.

10. A method used in a second node for wireless communication, comprising:
receiving a first wireless signal;
and together with a reception of the first wireless signal, transmitting a first information block on a second cell,
wherein as a response to each condition in a first set of conditions being satisfied, the first wireless signal is transmitted; the first information block comprises at least one of SS, MIB and SIB1; the first set of conditions comprises at least one of a first condition or a second condition, the first condition is related to link quality of at least a first cell, and the second condition comprises that the second cell is a network energy-saving cell; and of the first cell and the second cell, at least the latter does not have a legitimate SIB1 or a legitimate SSB.
